# DEMANDE DE BREVET EUROPEEN

(11) **EP 1 318 283 A1**
(43) Date de publication de la demande: **11.06.2003**
(21) Numéro de dépôt: 02293014.3
(22) Date de dépôt: 06.12.2002
(51) Int. Cl.: F02C 7/047, B64D 15/04, B64D 33/02

(54) **Dispositif de dégivrage d'une paroi externe d'aéronef**

(30) Priorité: 06.12.2001 FR 0115758
(71) Demandeur: Hurel-Hispano, 76700 Gonfreville l'Orcher (FR)
(72) Inventeur: Gonidec, Patrick, 31200 Toulouse (FR)
(74) Mandataire: Berrou, Paul

(57) **Abrégé**

L'invention concerne un dispositif de dégivrage d'une paroi externe (4) d'un aéronef, disposée à l'avant d'un logement (6), notamment la paroi formant la lèvre annulaire d'une entrée d'air d'un moteur aéronautique.

Ce dispositif comporte un conduit (7) pour amener un air chaud dans le compartiment (6) et une enveloppe fermée (10) disposée dans le compartiment (6) et présentant un orifice d'entrée (9) fixé sur l'extrémité (7a) du conduit d'amenée (7).

L'enveloppe (10) comporte une paroi souple ayant des zones (12, 13) non étanches à l'air et délimitant, à l'état gonflé, avec la face interne de la paroi à dégivrer (4), un canal mince où circule l'air chaud qui s'évacue de l'enveloppe (10) par les zones non étanches (12, 13).

## Description

L'invention concerne un dispositif de dégivrage d'une paroi externe d'un aéronef, disposée en amont d'un logement et notamment la paroi formant la lèvre annulaire d'une entrée d'air de moteur aéronautique, ce dispositif comportant un conduit pour amener un air chaud dans ledit logement.

L'invention concerne plus particulièrement les dispositifs de dégivrage des entrées d'air de nacelles de turboréacteurs et des entrées d'air des moteurs d'hélicoptères, mais elle peut également s'appliquer aux dispositifs de dégivrage des bords d'attaque des ailes d'aéronef.

Le bord d'attaque d'une nacelle aéronautique est constitué d'une peau métallique appelée lèvre d'entrée d'air et d'une cloison, dite cloison avant, qui forme un caisson avec la lèvre d'entrée d'air. L'ensemble constitue une cavité annulaire ayant une section en D.

Le but du dégivrage est d'éviter l'accumulation de glace sur la lèvre d'entrée d'air ou la formation de glace en aval, soit à l'extérieur, sur les capotages externes de la nacelle, ce qui en augmente la traînée, soit dans l'entrée d'air du moteur, ce qui est dangereux pour les aubes de soufflante. Pour atteindre cet objectif, le dégivrage le plus efficace consiste à faire entièrement s'évaporer les gouttelettes d'eau givrantes.

Pour ce faire, deux dispositifs de dégivrage à air chaud sont principalement utilisés sur les nacelles de moteur d'avion : le dispositif à éjecteur et le dispositif dit "piccolo".

Le dispositif à éjecteur est basé sur l'éjection circonférentielle dans la cavité annulaire de section en D, par une buse coudée, d'un jet d'air chaud qui va circuler le long de la cavité en réchauffant et en entraînant l'air présent dans cette cavité. Un tel dispositif est dévoilé par US 4 688 745.

Le dispositif dit "piccolo" consiste à diriger l'air dans un tube annulaire perforé qui crée une multitude de jets venant impacter la paroi aux endroits appropriés de façon à augmenter l'efficacité du dégivrage. US 5 841 079 décrit un tel dispositif.

Le dispositif dit "piccolo" introduit dans la cavité un tube supplémentaire par rapport au dispositif à éjecteur. Ce tube supplémentaire ajoute de la masse à la structure et il doit être attaché à la cloison avant de manière à permettre la dilatation thermique du tube piccolo tout en résistant au fort niveau de vibration ambiant et en évitant la génération de criques. Ces contraintes structurales conduisent à une conception délicate et peuvent induire, en cas de maladresse de conception, un accroissement de masse significatif ou des problèmes en service par suite des ruptures des attaches du tube.

Le dispositif à éjection est structuralement plus simple. Cependant, l'air chaud n'est plus dirigé par un tube et le rendement de dégivrage est plus faible que celui obtenu par un dispositif dit "piccolo". Ceci entraîne une pression d'air dans la cavité et un débit d'air chaud prélevé supérieurs pour le dispositif à éjecteur que pour le dispositif piccolo. La pression plus élevée entraîne un renforcement significatif de la cloison avant et donc un accroissement de la masse.

En outre, avec le dispositif à éjection, il est très difficile d'atteindre un dégivrage complètement évaporant sans atteindre des débits d'air chaud élevés ou des pressions dans la cavité de section en D prohibitives.

Les deux dispositifs actuellement utilisés conduisent donc soit à des problèmes de structure, soit à des problèmes de performances.

Le but de l'invention est de proposer un dispositif de dégivrage qui a les qualités du dispositif dit piccolo et qui élimine les problèmes structuraux.

L'invention concerne donc un dispositif de dégivrage d'une paroi externe d'un aéronef, disposée à l'avant d'un logement, notamment la paroi formant la lèvre annulaire d'une entrée d'air d'un moteur aéronautique, ce dispositif comportant un conduit pour amener un air chaud dans ledit logement.

Selon l'invention, ce dispositif est caractérisé par le fait qu'il comporte en outre une enveloppe fermée disposée dans ledit logement et présentant un orifice d'entrée fixé sur l'extrémité du conduit d'amenée, ladite enveloppe comprenant une paroi souple ayant des zones non étanches à l'air et délimitant, à l'état gonflé, avec la face interne de la paroi à dégivrer, un canal mince où circule l'air chaud qui s'évacue de l'enveloppe par les zones non étanches. Cette disposition permet d'augmenter sensiblement les échanges thermiques avec la lèvre d'entrée d'air tout en minimisant ces échanges avec la cloison avant de l'entrée d'air. Ceci augmente l'efficacité du dégivrage et réduit l'impact thermique sur la structure environnante.

Les avantageuses dispositions suivantes sont en outre préférentiellement adoptées ;
- l'orifice d'entrée est formé par un col s'adaptant sur l'extrémité du conduit d'amenée et fixé sur ce dernier par des moyens de serrage ;
- il est prévu des moyens de fixation de l'enveloppe sur la structure environnante ;
- les moyens de fixation de l'enveloppe coopèrent avec des portions d'enveloppe situées en dehors des zones non étanches ;
- l'enveloppe est réalisée à partir d'un tissu dont les fibres sont adaptées à la température de l'air ;
- les fibres sont imprégnées d'un revêtement anti-friction ;
- le tissu est rendu moins poreux en dehors des zones non étanches par dépôt d'un film métallique ou dans un matériau adapté à la température locale ;
- l'enveloppe comporte sur sa face externe en regard de la paroi à dégivrer des surépaisseurs qui viennent en appui sur la paroi à dégivrer et délimitant entre elles des canaux.

Dans le cas où le dispositif est utilisé pour dégivrer la lèvre annulaire d'une entrée d'air de moteur aéronautique, ladite lèvre étant disposée à l'avant d'une cloison annulaire, l'enveloppe a de préférence la forme d'un manchon torique de section en D.

L'enveloppe peut comporter des compartiments annulaires étanches et munis de clapets anti-retour qui se gonflent lors de l'utilisation du dégivrage et restent gonflés quand le dégivrage n'est plus utilisé.

Avantageusement, le conduit d'amenée est disposé dans un conduit de sûreté souple en tissu résistant aux hautes températures.

D'autres caractéristiques et avantages de l'invention ressortiront à la lecture de la description suivante faite à titre d'exemple et en référence aux dessins annexés dans lesquels :
- la figure 1 est une coupe partielle d'une entrée d'air de turboréacteur ;
- la figure 2 montre en coupe l'enveloppe du dispositif selon l'invention, en position gonflée, au droit du conduit d'amenée d'air chaud ;
- la figure 3 montre l'enveloppe de la figure 2 en position dégonflée ;
- la figure 4 montre en perspective des moyens de fixation de l'enveloppe sur la structure environnante ;
- la figure 5 est semblable à la figure 2 et montre en coupe l'enveloppe en position gonflée dans le logement de section en D dans une zone située en dehors du conduit d'amenée d'air chaud ;
- la figure 6 est semblable à la figure 2 et montre un tube de sûreté souple en tissu ;
- la figure 7 est une vue locale d'un mode de réalisation d'orifices d'évacuation d'air chaud en utilisant localement d'une trame de tissu lâche ;
- la figure 8 montre un mode de réalisation de la sortie de l'air de dégivrage vers l'extérieur au moyen d'une grille ; et
- la figure 9 montre en coupe un mode de réalisation d'une enveloppe comportant des compartiments annulaires étanches et gonflés en permanence.

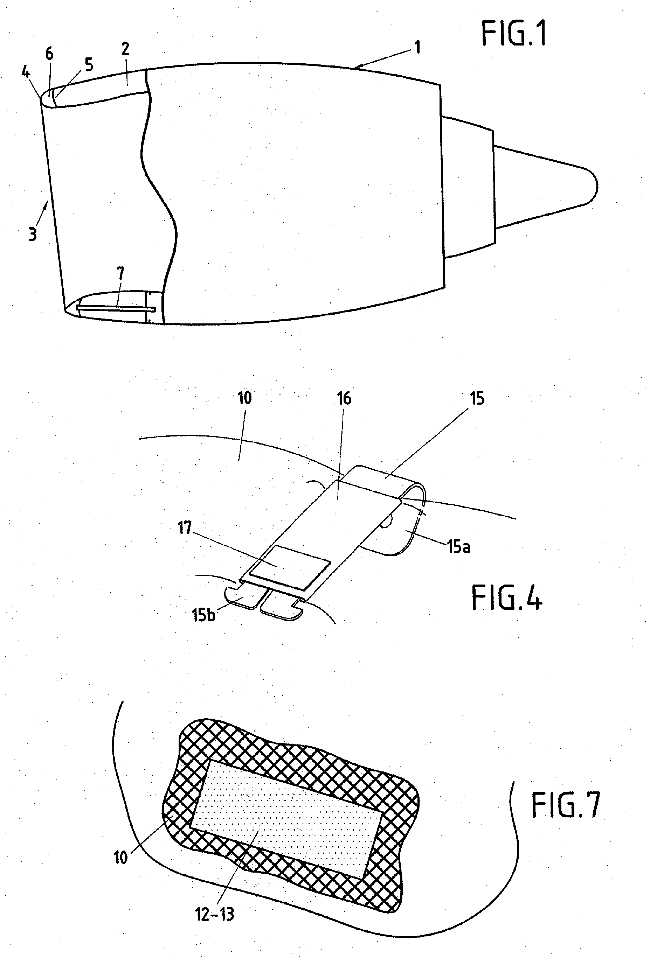

La figure 1 montre schématiquement un turboréacteur 1 qui comporte une nacelle 2 entourant la soufflante et qui présente, à l'avant, une entrée d'air 3 annulaire, formée d'une lèvre avant 4 et d'une cloison dite avant 5 se raccordant aux extrémités de la lèvre 3. La lèvre 4 et la cloison avant 5 délimitent entre elles une cavité annulaire 6 de section en D. La référence 7 représente un conduit d'amenée d'air chaud qui traverse la cloison avant 5 et délivre, sur demande, un air chaud dans la cavité 6 prélevé dans un étage d'un compresseur du turboréacteur 1. L'air chaud introduit dans la cavité 6 sert à dégivrer la lèvre 4 qui a une forme aérodynamique et, notamment, le bord d'attaque 4a de cette lèvre. L'air chaud de dégivrage est ensuite évacué notamment dans le conduit d'entrée de la soufflante, et partiellement vers l'extérieur de la nacelle, afin d'éviter la formation de glace sur le capotage externe. Les orifices de sortie de l'air de dégivrage de la cavité 6 ne sont pas montrés sur les dessins.

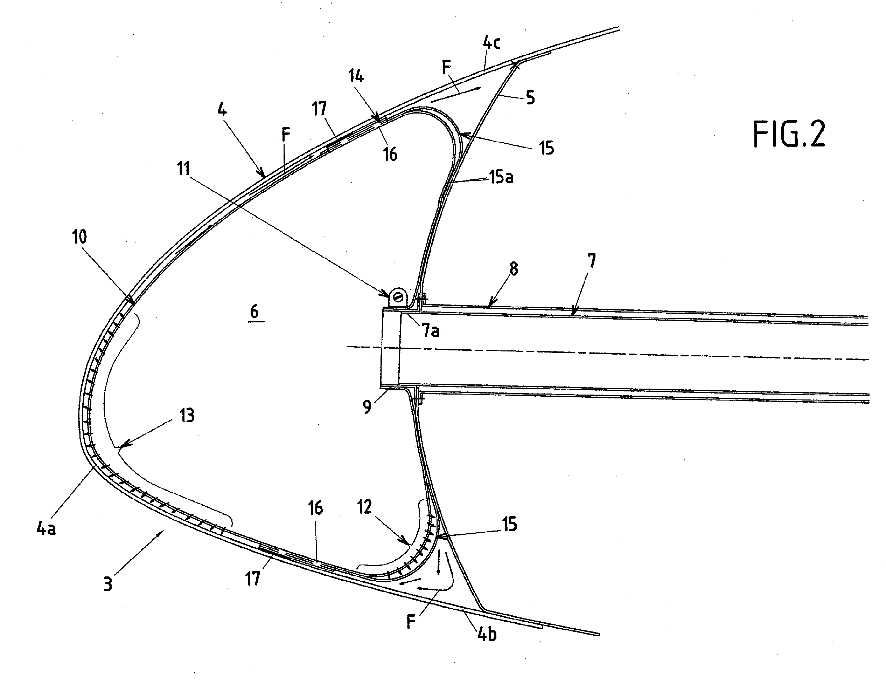

La figure 2 montre que le conduit d'amenée 7 d'air chaud est disposé, à l'extérieur de la cavité 6, dans un tube de sûreté 8 destiné à assurer l'alimentation en air chaud de la cavité 6 en cas de défaillance du conduit d'amenée 7. Sur cette figure 2, on voit que l'extrémité 7a du conduit d'amenée 7 située dans la cavité 6 est disposée dans le col 9 d'une enveloppe souple et fermée 10 qui, à l'état gonflé, occupe la quasi-totalité du volume de la cavité 6.

Du fait que la cavité 6 est annulaire, l'enveloppe 10 se présente sous la forme d'une chambre à air torique de section en D à coins arrondis.

Le col 9 dirigé vers l'intérieur de l'enveloppe 10 est fixé sur l'extrémité 7a du conduit d'amenée 7 au moyen d'un collier de serrage 11, par exemple.

Lorsque le conduit d'amenée 7 délivre de l'air chaud à l'intérieur de l'enveloppe souple 10, ce dernier se gonfle sous l'effet de la pression. Ce gonflement peut entraîner seulement une mise sous tension de la paroi constitutive de l'enveloppe 10, lorsque cette paroi est indéformable dans son plan, ou peut conduire à une dilatation notable de l'enveloppe 10 qui prend alors une forme moins volumineuse à l'état non gonflé. Dans tous les cas, la paroi de l'enveloppe 10 n'est pas parfaitement étanche, et elle laisse s'écouler de l'air de façon contrôlée soit par des orifices calibrés ménagés dans des zones 12 de l'enveloppe 10, soit par une porosité contrôlée d'autres zones 13.

Ces zones de diffusion 12 et 13 d'air chaud sont disposées dans des endroits privilégiés en regard de la face interne de la lèvre 4.

L'enveloppe 10 présente en outre sur sa face externe, notamment en regard de la lèvre 4, des surépaisseurs ponctuelles 14 ou allongées qui viennent en appui contre la face interne de la lèvre 4 et qui ménagent entre elles des canaux minces par lesquels l'air chaud diffusé par les zones de diffusion 12 et 13 s'écoule à grande vitesse et réchauffe la lèvre 4, avant d'atteindre les orifices de sortie de la cavité 6. Le sens de circulation de l'air autour de l'enveloppe 10 est montré sur la figure 2 par des flèches F.

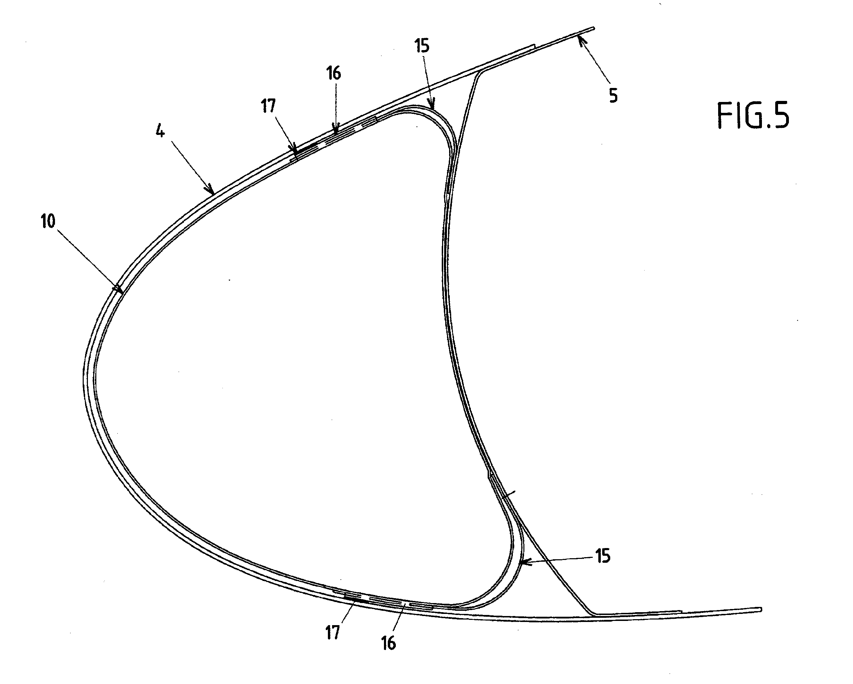

L'enveloppe 10 est fixée ponctuellement à la structure environnante et notamment au voisinage des angles de la cavité 6, à la jonction de la cloison avant 5 et des bords 4b, 4c de la lèvre 4. A cet effet, ces angles sont équipés de pattes élastiques recourbées 15 dont une extrémité 15a est fixée sur la cloison avant 5, et dont l'autre extrémité 15b est libre, de telle manière qu'une patte 15 peut être enfilée dans un manchon 16 solidaire de la paroi externe de l'enveloppe 10. Ce manchon 16 comporte, sur sa face externe, des patins de friction 17 en appui contre la face interne de la lèvre 4 et qui jouent le rôle des surépaisseurs 14. La disposition d'une patte 15 dans un manchon 16 est montrée en détail sur la figure 4.

Les pattes 15 sont précontraintes de manière à se plaquer naturellement contre la lèvre 4. Les parois externes des manchons 16 se trouvent ainsi pincées entre les pattes 15 et la face interne de la lèvre 4. Cette disposition minimise les risques de vibration des pattes d'attache 15.

Les patins de friction 17 sont réalisés dans un matériau approprié de manière à éviter toute usure de la paroi de la lèvre 4 ou de l'enveloppe 10.

Les pattes d'attache 15 ont une forme appropriée pour retenir longitudinalement les manchons 16, afin qu'ils ne puissent pas glisser après montage de l'enveloppe 10. Du fait que les pattes 15 sont fixées sur la cloison avant 5, on peut monter et démonter la lèvre 4 de l'entrée d'air sans avoir à intervenir sur le reste du dispositif de dégivrage.

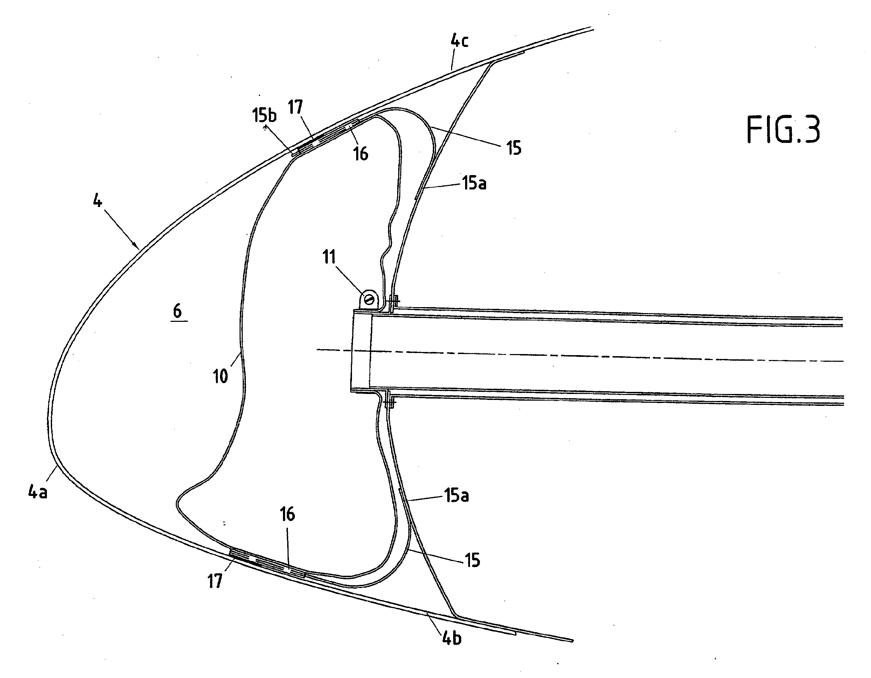

La figure 3 montre la disposition de l'enveloppe 10 dans la cavité 6 à l'état dégonflé, on voit que les pattes 15 retiennent les manchons 16.

L'enveloppe 10 peut être avantageusement réalisée en tissu ayant des fibres adaptées à la température de l'air, par exemple des fibres de céramique, des fibres de verre ou de carbone. Le tissu peut être sec ou imprimé et/ou polymérisé dans une matrice permettant d'avoir une grande flexibilité et résistant à la température et à la pression de l'air ambiant. Les fibres peuvent être imprégnées de Téflon ou de tout autre revêtement anti-friction pour améliorer la déformation et la souplesse du tissu.

Le tissu peut avantageusement être rendu étanche ou moins poreux par dépôt d'une fine couche métallique, ou dans un matériau adapté à la température locale, dans certaines zones, ce qui aura pour effet de boucher les pores laissés par la trame du tissu. Cette métallisation a en outre l'avantage d'améliorer l'isolation thermique en réduisant le rayonnement vers les structures environnantes.

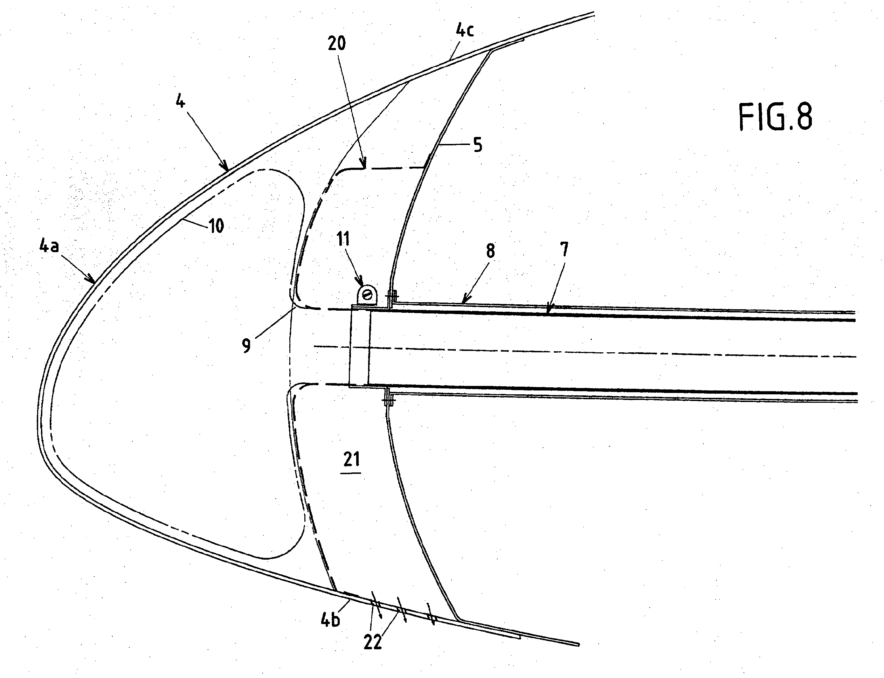

Les zones de diffusion 12 et 13, ayant des orifices calibrés ou une porosité contrôlée, peuvent être réalisées par un tissage plus ou moins lâche du tissu selon l'objectif recherché, ainsi que cela est montré sur la figure 7. On pourra avantageusement régler la section de perforation équivalente pour avoir un régime sonique au travers des orifices, ce qui permet de contrôler simplement le débit de l'écoulement à travers l'enveloppe 10.

Afin de mieux contrôler l'intervalle entre l'enveloppe 10 et la face interne de la lèvre 4, on peut incorporer dans le tissu des torons de plus gros diamètre qui forment localement des surépaisseurs.

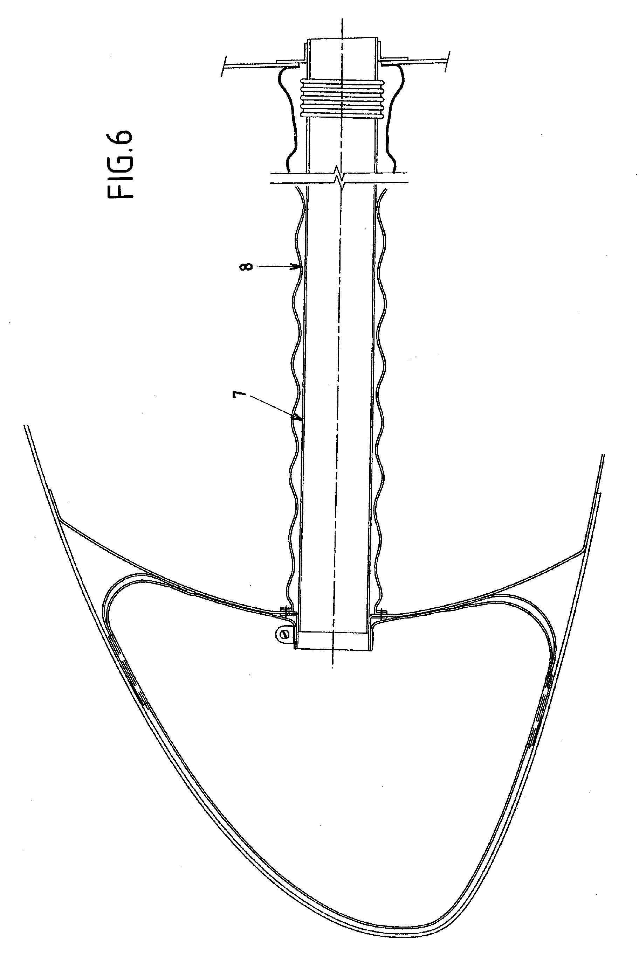

La figure 6 montre une variante de réalisation du tube de sûreté 8 qui est réalisé sous la forme d'un tuyau souple en tissu résistant aux hautes températures. Ce tube 8 est tissé ou plié de telle manière qu'il ne transmet aucune contrainte de dilatation thermique à la structure environnante. En cas de fuite ou de rupture du conduit d'amenée 7, le tube de sûreté 8 est destiné à contenir la fuite. De préférence, le tube de sûreté 8 est étanche et réalisé en tissu dont les fibres sont imprégnées ou métallisées. Mais le tube de sûreté 8 peut également être poreux et laisser passer une fuite faible qui n'aura pas d'impact significatif sur la structure environnante. On évitera notamment la possibilité d'émission d'un jet chaud focalisé sur un point de la structure. La fuite éventuelle pourra être évacuée sans problème par une ventilation appropriée.

On peut également réaliser le tube de sûreté 8 à partir d'un tissu pouvant se dilater de façon importante. On peut ainsi détecter les fuites éventuelles du conduit d'amenée 7 au moyen d'un dispositif repérant la dilatation de ce type de tube de sûreté 8, par exemple au moyen d'un anneau frangible muni d'un contact électrique. Le dispositif ainsi obtenu est plus fiable que les senseurs de pression, électriques ou mécaniques, utilisés actuellement.

Les orifices de sortie de l'air de dégivrage de la cavité 6 peuvent rester identiques à ceux déjà connus par l'état de la technique. Ils peuvent être disposés notamment dans les bords 4b et 4c de la lèvre 4. Dans le cas de la rupture de la jonction entre l'enveloppe 10 et l'extrémité 7a du conduit d'amenée 7, il existe un risque faible de voir ces orifices de sortie obstrués par l'enveloppe 10. Une telle configuration conduirait à une augmentation importante de la pression dans la cavité 6 qui pourrait entraîner des conséquences fâcheuses. Pour éviter ce type d'incident, ainsi que cela est montré sur la figure 8, une grille 20 entourant le col 9 est disposée à l'extérieur de l'enveloppe 10 entre cette dernière et la cloison avant 5. Cette grille 20 délimite avec la cloison avant 5 le bord 4b de la lèvre 4 une chambre 21 communiquant avec l'extérieur par des orifices de sortie 22 ménagés dans le bord 4b de la lèvre 4. Dans le cas improbable où la jonction entre le col 9 et le conduit d'amenée 7 viendrait à se rompre, l'air de dégivrage délivré par le conduit d'amenée 7 peut toujours s'évacuer à travers la grille 20 et la chambre 21, par les orifices de sortie 22, ce qui évite tout risque de surpression dans la cavité 6.

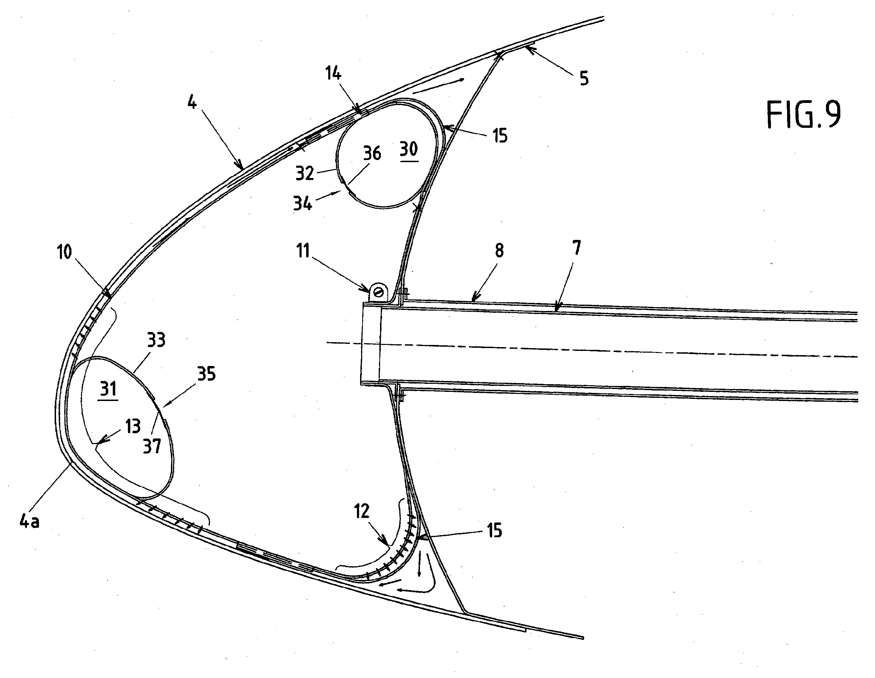

La figure 9 montre une variante et réalisation de l'invention. L'intérieur de l'enveloppe 10 comporte des compartiments annulaires 30, 31 délimités par des chambres à air étanches 32, 33 solidarisées à l'enveloppe 10, qui comportent chacune un orifice d'entrée 34, 35 susceptible d'être obturé par des clapets anti-retour 36, 37. Lorsqu'on introduit un air sous pression à l'intérieur de l'enveloppe 10, une partie de cet air pénètre par les orifices d'entrée 34, 35 dans les compartiments annulaires 30, 31. Lorsque l'enveloppe 10 se dégonfle, les clapets anti-retour 36, 37 obturent les orifices d'entrée 34, 35, et les chambres à air 32, 33 restent gonflées. Les chambres à air 32, 33 sont disposées de préférence dans les coins de la cavité 6 et sur le bord d'attaque 4a de la lèvre 4. Ceci permet de minimiser le nombre de pattes d'attache 15 et d'éviter toute usure ou vibration de l'enveloppe 10 quand le système de dégivrage n'est pas en service.

Les avantages de l'enveloppe gonflable 10 en tissu par rapport à un tube piccolo de l'art antérieur sont multiples :
- le tissu est de masse comparable ou plus léger que le tube métallique d'un piccolo ;
- le tissu convenablement tissé ou imprégné ne propage pas les criques ;
- le tissu souple approprié n'induit pas de contraintes thermiques significatives dans la structure environnante ou dans ses fixations;
- l'efficacité thermique est très supérieure à celle des dispositifs existants et permet de diminuer le débit d'air chaud capté sur le moteur ou d'utiliser un air plus frais, ce qui soulage la structure environnante et permet de choisir des matériaux plus légers pour cette structure et pour le conduit d'amenée 7 ; la réduction du débit d'air de dégivrage permet également de réduire la taille du conduit d'amenée d'air chaud ;
- la réduction du débit, de la pression et de la température d'air chaud nécessaire au dégivrage conduit également à une minimisation des conséquences de cas de pannes ; ceci permet une optimisation du système de dégivrage de la captation sur le moteur à la sortie de dégivrage ;
- lorsqu'elle est en action, l'enveloppe 10 constitue une protection efficace contre les impacts violents sur l'entrée d'air 3, les impacts d'oiseaux par exemple ; cet avantage permet ainsi d'améliorer un des cas dimensionnant de la structure d'entrée d'air ; même en configuration dégonflée, la structure tissée contribue sensiblement à freiner la pénétration de l'entrée d'air 3 par un projectile.

## Revendications

1. Dispositif de dégivrage d'une paroi externe d'un aéronef, disposée à l'avant d'un logement (6), notamment la paroi formant la lèvre annulaire d'une entrée d'air d'un moteur aéronautique, ce dispositif comportant un conduit (7) pour amener un air chaud dans ledit logement (6), **caractérisé par le fait qu'**il comporte en outre une enveloppe (10) fermée disposée dans ledit logement (6) et présentant un orifice d'entrée (9) fixé sur l'extrémité (7a) du conduit d'amenée (7), ladite enveloppe (10) comprenant une paroi souple ayant des zones (12, 13) non étanches à l'air et délimitant, à l'état gonflé, avec la face interne de la paroi à dégivrer (4), un canal mince où circule l'air chaud qui s'évacue de l'enveloppe (10) par lesdites zones non étanches (12, 13).

2. Dispositif selon la revendication 1, **caractérisé par le fait que** l'orifice d'entrée (9) est formé par un col s'adaptant sur l'extrémité (7a) du conduit d'amenée (7) et fixé sur ce dernier par des moyens de serrage (11).

3. Dispositif selon l'une des revendications 1 ou 2, **caractérisé par le fait qu'**il est prévu des moyens de fixation (15) de l'enveloppe (10) sur la structure environnante.

4. Dispositif selon la revendication 3, **caractérisé par le fait que** des moyens de fixation de l'enveloppe (10) comportent des pattes (15) coopérant avec des portions d'enveloppe situées en dehors des zones non étanches (12, 13).

5. Dispositif selon l'une quelconque des revendications 1 à 4, **caractérisé par le fait que** l'enveloppe (10) est réalisée à partir d'un tissu dont les fibres sont adaptées à la température de l'air.

6. Dispositif selon la revendication 5, **caractérisé par le fait que** les fibres sont imprégnées d'un revêtement anti-friction.

7. Dispositif selon l'une des revendications 5 ou 6, **caractérisé par le fait que** le tissu est rendu moins poreux en dehors des zones non étanches (12, 13) par dépôt d'un film métallique.

8. Dispositif selon l'une quelconque des revendications 1 à 7, **caractérisé par le fait que** l'enveloppe (10) comporte sur sa face externe en regard de la paroi à dégivrer des surépaisseurs (14) qui viennent en appui sur la paroi à dégivrer (4) et délimitant entre elles des canaux.

9. Dispositif selon l'une quelconque des revendications 1 à 8 pour dégivrer la lèvre annulaire (4) d'une entrée d'air (3) de moteur aéronautique, ladite lèvre (4) étant disposée à l'avant d'une cloison annulaire (5), **caractérisé par le fait que** l'enveloppe (10) a la forme d'une chambre à air torique de section en D.

10. Dispositif selon la revendication 9, **caractérisé par le fait que** l'enveloppe (10) comporte des compartiments annulaires (30, 31) étanches dont les orifices d'entrée (34, 35) sont munis de clapets anti-retour (36, 37) et qui se gonflent lors de l'utilisation du dégivrage et restent gonflés quand le dégivrage n'est plus utilisé.

11. Dispositif selon l'une des revendications 1 à 10, **caractérisé par le fait que** le conduit d'amenée (7) est disposé dans un tube de sûreté (8) souple en tissu résistant aux hautes températures.
